# EUROPEAN PATENT APPLICATION

(11) **EP 4 742 430 A1**
(43) Date of publication of application: **13.05.2026**
(21) Application number: 24863115.2
(22) Date of filing: 28.08.2024
(51) Int. Cl.: H01M 50/552, H01M 50/562, H01M 50/553, H01M 50/147, H01M 50/564, H01M 50/141, H01M 50/166, H01M 50/103

(54) **SECONDARY BATTERY**

(30) Priority: 05.09.2023 KR 20230117884; 21.05.2024 KR 20240066011
(71) Applicant: LG Energy Solution, Ltd., Seoul 07335 (KR)
(72) Inventor: LEE, Ji Sun, Daejeon 34122 (KR); KIM, Sang Hun, Daejeon 34122 (KR); LEE, Jae Ho, Daejeon 34122 (KR); CHOI, Ji Eun, Daejeon 34122 (KR)
(74) Representative: Goddar, Heinz J.
(86) International application number: PCT/KR2024/012884
(87) International publication number: WO 2025/053534

(57) **Abstract**

The present invention relates to a secondary battery in which battery capacity is improved while having relatively few restriction in shape, and an amount of moisture introduced from the outside is reduced. The secondary battery according to the present invention may include an electrode assembly, an exterior film surrounding a portion of the electrode assembly, and a cap surrounding a remaining portion of the electrode assembly, wherein the cap may include an exterior part coupled to the exterior film; and a terminal part exposed to an outside and an inside of the exterior part and electrically connected to the electrode assembly at a portion thereof, which is exposed to the inside of the exterior part, wherein the terminal part may be restricted in movement in a direction away from the electrode assembly.

## Description

### TECHNICAL FIELD

### CROSS-REFERENCE TO RELATED APPLICATION

The present application claims the benefit of the priority of Korean Patent Application Nos. 10-2023-0117884, filed on September 5, 2023, and 10-2024-0066011, filed on May 21, 2024, which are hereby incorporated by reference in their entirety.

### TECHNICAL FIELD

The present invention relates to a secondary battery, and more particularly, to a secondary battery that is chargeable or dischargeable.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

Secondary batteries may be classified into cylindrical cells, pouch cells, and prismatic cells according to their shape. Among them, such a pouch cell may be manufactured by accommodating an electrode assembly in the form of a stack of a positive electrode, a negative electrode, a separator, etc. inside a pouch and then sealing an outer portion of the pouch.

The pouch cell according to the related art may have a limitation of cracks occurring in a pouch film in a process of molding the pouch film, and may pouch films are discarded after a degassing process. In addition, a moldable depth is limited depending on material characteristics of the pouch film, and thus there is a limit to increase in battery capacity.

Thus, there is a need for a type of secondary battery that is capable of improving the battery capacity while having relatively few restriction in shape.

### DISCLOSURE OF THE INVENTION

### TECHNICAL PROBLEM

An object of the present invention is to provide a secondary battery in which battery capacity is improved while having relatively few restriction in shape, and an amount of moisture introduced from the outside is reduced.

### TECHNICAL SOLUTION

A secondary battery according to the present invention may include an electrode assembly, an exterior film surrounding a portion of the electrode assembly, and a cap surrounding a remaining portion of the electrode assembly, wherein the cap may include an exterior part coupled to the exterior film, and a terminal part exposed to an outside and an inside of the exterior part and electrically connected to the electrode assembly at a portion thereof, which is exposed to the inside of the exterior part, wherein the terminal part may be restricted in movement in a direction away from the electrode assembly.

The terminal part may include an exposed part exposed to the outside of the exterior part, and a support part connected to the exposed part and supported on the exterior part inside the exterior part to prevent the exposed part from being separated from the exterior part.

The exposed part may include: an outer member provided in an overlapping shape by a through-hole defined in the exterior part so as to connect the exposed part to the support part, and a passing member disposed along an edge of the outer member and extending from the edge of the outer member toward the inside of the exterior part to pass through the through-hole.

The support part may include a first member extending from the passing member in a direction perpendicular to an extension direction of the passing member and provided to be hooked on an inner surface of the exterior part.

The support part may further include a second member extending from the first member toward the electrode assembly and having one end electrically connected to the electrode assembly.

The second member may include a metal material, and the exterior film may include a resin layer coupled to the second member by heat and a pressure.

The exterior part may include a first cover part covering the first member from the outside of the exterior part, and a second cover part disposed between the second member and the exterior film, coupled to the exterior film and extending from the first cover part toward the electrode assembly.

The support part may include a metal material, the first cover part may include a resin material having adhesive properties by heat, and the support part and the first cover part may be coupled to each other by heat and a pressure.

The terminal part may be disposed to protrude in a direction, which is away from the electrode assembly, from one surface of the exterior part.

In the cap, one surface of the exterior part may be disposed on the same surface as one surface of the terminal part.

The exterior part may include a metal material, and the exterior film may include a metal layer coupled to the exterior part by welding.

The exterior part may include a resin material having adhesive properties by heat, and the exterior film may include a resin layer coupled to the exterior part by heat and a pressure.

The exterior film and the exterior part may be coupled to each other by an adhesive applied between the exterior film and the exterior part.

The exterior part and the terminal part may be coupled to each other by an adhesive applied between the exterior part and the terminal part.

A secondary battery may include an electrode assembly, an exterior film having an internal space in which the electrode assembly is accommodated and an exterior opening configured to allow the internal space to communicate with the outside, and
a cap covering the exterior opening of the exterior film, wherein the cap may include an exterior part coupled to the exterior film, and a terminal part exposed to an outside and an inside of the exterior part and electrically connected to the electrode assembly at a portion thereof, which is exposed to the inside of the exterior part, wherein the terminal part may be disposed to cover at least a portion of the exterior opening and made of a material having lower moisture permeability than that of a material forming the exterior part.

### ADVANTAGEOUS EFFECTS

In the secondary battery according to the embodiment of the present invention, since there is no process of molding the exterior film, there may be few restriction on the form in which the exterior film accommodates the electrode assembly, and the possibility of the defects such as the cracks in the exterior film may be reduced to improve the battery capacity.

In addition, the degree of permeation of moisture from the outside of the secondary battery into the secondary battery may be reduced to improve the safety of the secondary battery.

In addition, the structural stability of the secondary battery may be improved by the coupling relationship and arrangement of the terminal part and the exterior part.

The effects of the prevent invention are not limited by the aforementioned description, and thus, more varied effects are involved in this specification.

### BRIEF DESCRIPTION OF THE DRAWINGS

FIG. 1 is a schematic perspective view of a secondary battery according to Embodiment 1 of the present invention.
FIG. 2 is a schematic exploded perspective view of the secondary battery according to Embodiment 1 of the present invention.
FIG. 3 is a schematic partial cross-sectional view illustrating the secondary battery, taken along line A-A' of FIG. 1 according to Embodiment 1 of the present invention.
FIG. 4 is a schematic exploded perspective view of a secondary battery according to Embodiment 2 of the present invention.
FIG. 5 is a schematic cross-sectional view illustrating a cap and a portion of an exterior film of the secondary battery according to Embodiment 2 of the prevent invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

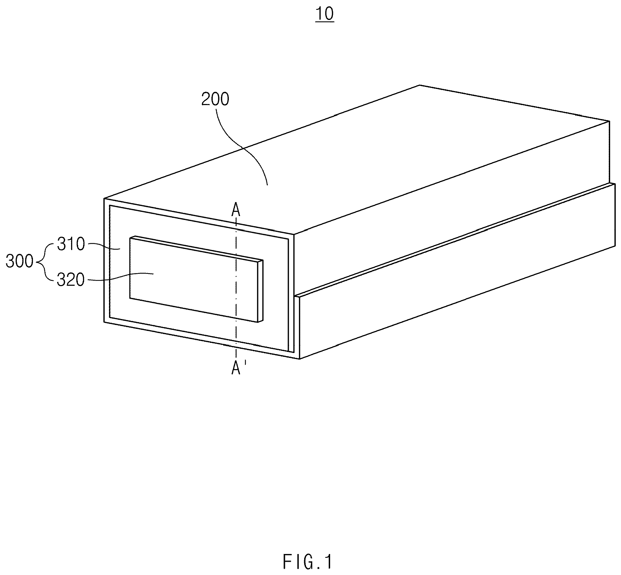

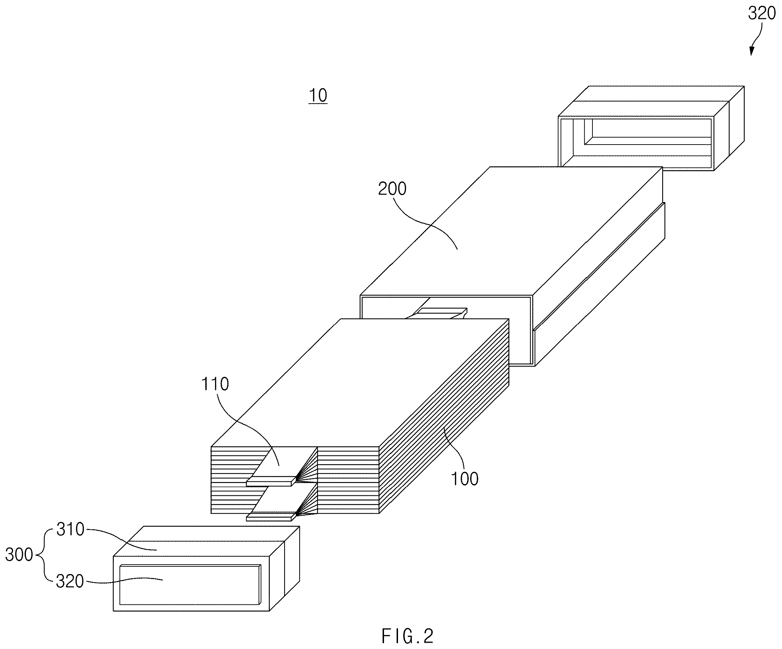

FIG. 1 is a schematic perspective view of a secondary battery 10 according to Embodiment 1 of the present invention, and FIG. 2 is a schematic exploded perspective view of the secondary battery 10 according to Embodiment 1 of the present invention.

The secondary battery 10 according to Embodiment 1 of the present invention may include an electrode assembly 100, an exterior film 200, and a cap 300. Hereinafter, each configuration of the secondary battery 10 will be described in more detail. For reference, contents of Embodiment 1 may be equally applied to embodiments described later, as long as there is no conflict.

The electrode assembly 100 of the secondary battery 10 may include a positive electrode, a negative electrode, and a separator. Here, the separator may be disposed between the positive electrode and the negative electrode to physically separate the positive electrode from the negative electrode. The electrode assembly 100 may be provided in a form in which the positive electrode, the negative electrode, and the separator are stacked, or a jelly-roll form in which the positive electrode, a negative electrode, and a separator are wound.

The electrode assembly 100 may include an electrode tab 110 connected to the electrode. The electrode tab 110 may be provided separately or may be provided as a portion of a current collector constituting the electrode. For reference, if the electrode assembly 100 is an all-solid-state battery, a solid electrolyte may be provided instead of the separator.

Referring to FIG. 2, the secondary battery 10 according to Embodiment 1 of the present invention may include an exterior film 200. The exterior film 200 of the secondary battery 10 may be provided to surround a portion of the electrode assembly 100. Specifically, the exterior film 200 may be provided to surround a cap 300, which will be described later, and the electrode assembly 100. More specifically, the exterior film 200 may be coupled to the cap 300 to define an internal space, and the electrode assembly 100 may be accommodated in the internal space.

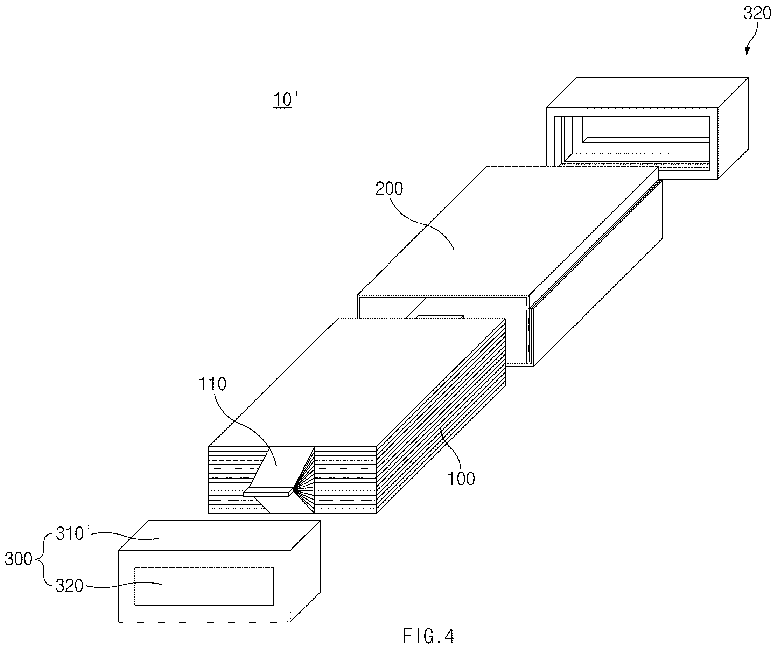

The exterior film 200 of the secondary battery 10 may have a shape in which a sheet or film is rolled along a side surface of the electrode assembly 100. That is, the exterior film 200 may be disposed to surround a side portion of the electrode assembly 100. Here, one end and the other end of the exterior film 200 may be disposed to meet each other and surround the electrode assembly 100. In relation to the form in which the one end and the other end of the exterior film 200 meet each other, it is possible to couple one surface of the one end to the other surface of the other end so that the one surface and the other surface are in contact with each other (see FIG. 2), and it is possible to couple one surface of one end to one surface of the other end so that the one surface of the one end and the one surface of the other end are in contact with each other (see FIG. 4). This is only an example, and the form in which one end and the other end of the exterior film 200 are coupled to define a space for accommodating the electrode assembly 100 may vary.

Regarding the method by which one end and the other end of the exterior film 200 are coupled to each other, one end and the other end of the exterior film 200 may be coupled to each other by sealing by heat or sealing by heat and a pressure. That is, the exterior film 200 may include a material that has sealing properties by heat. Specifically, the exterior film 200 may include a material that is melted by the heat and has adhesive properties. For example, the exterior film 200 may include at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Mainly, a polyolefin-based resin such as polypropylene (PP) or polyethylene (PE) may be used. Particularly, polypropylene (PP) may be excellent in mechanical properties such as tensile strength, rigidity, surface hardness, abrasion resistance, and heat resistance and chemical properties such as corrosion resistance.

The exterior film 200 may be disposed to surround a portion of the electrode assembly 100, and the cap 300 may be disposed to surround a remaining portion of the electrode assembly 100. Specifically, when the exterior film 200 is disposed to surround the electrode assembly 100 along the side surface of the electrode assembly 100, an exterior opening may be defined at each of both ends of the electrode assembly 100. The cap 300 of the secondary battery 10 may be coupled to the exterior film 200 in a form that covers the exterior opening at each of both the ends of the electrode assembly 100, and the electrode assembly 100 may be accommodated in the internal space defined by the exterior film 200 and the cap 300.

As an example of a method for coupling the cap 300 to the exterior film 200, the cap 300 and the exterior film 200 may be coupled to each other by welding. Specifically, an exterior part 310 may include a metal material, and the exterior film 200 may include a metal layer, which is capable of being coupled to the exterior part 310 by welding, at a portion facing the exterior part 310.

As another example of a method of coupling the cap 300 to the exterior film 200, the cap 300 and the exterior film 200 may be coupled to each other by sealing. Specifically, the exterior part 310 may include a resin material that has adhesive properties by heat, and the exterior film 200 may include a resin layer, which is capable of being coupled to the exterior part 310 by heat and a pressure, at a portion facing the exterior part 310. Here, the resin layer may include a material having sealing properties by heat as described above.

In the pouch cell according to the related art, a cup part that accommodates the electrode assembly 100 may be molded by molding a sheet or film. During the molding process of the cup part, a moldable depth may be limited depending on the material characteristics of the sheet or film, and the capacity at which the electrode assembly 100 is accommodated may also be limited. In addition, when molding the sheet or film, a thickness at a corner is the thinnest, which often resulted in defects such as cracks. In addition, the pouch cell according to the related art may require a gas collection part to collect a gas during the degassing process so as to remove the gas accumulated inside the pouch, and a large portion of the gas collection part may be removed and discarded after the degassing process.

On the other hand, in the secondary battery 10 according to Embodiment 1 of the present invention, the exterior film 200 may be used to match a volume of the electrode assembly 100, and thus, a limit to the capacity at which the electrode assembly 100 is accommodated may not occur. In addition, since there is no need for molding the cup part, it is possible to prevent defects such as cracks from occurring in the exterior film 200, and the material and thickness of the exterior film 200 may be relatively freely selected. In addition, since the electrolyte injection and the degassing process are carried out through the cap 300, economic efficiency of the process may be improved because the exterior film 200 is not generated to be discarded.

Although not described in detail in the present invention, the cap 300 may further include an electrolyte injection port for injecting an electrolyte or a gas discharge port for discharging the gas in the degassing process.

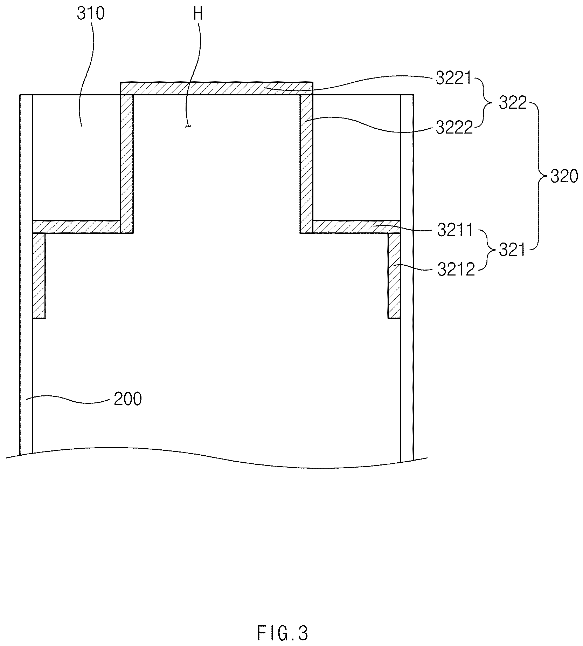

FIG. 3 is a schematic partial cross-sectional view illustrating the secondary battery 10, taken along line A-A' of FIG. 1 according to Embodiment 1 of the present invention. Referring to FIG. 3, the cap 300 of the secondary battery 10 according to Embodiment 1 of the present invention may include the exterior part 310 and a terminal part 320.

The exterior part 310 of the cap 300 may be coupled to the exterior film 200. In addition, the terminal part 320 of the cap 300 may be coupled to the exterior part 310 and may be exposed to the outside and inside of the exterior part 310. Here, the inside of the exterior part 310 may refer to a portion of the internal space defined by the cap 300 and the exterior film 200, and the outside of the exterior part 310 may be referred to as an external space of the cap 300 and the exterior film 200. A portion of the terminal part 320 exposed to the inside of the exterior part 310 may be electrically connected to the electrode assembly 100. Here, the electrical connection may include both direct connection between the terminal part 320 and the electrode assembly 100 and indirect connection through another electrically conductive member.

As an example of the method of coupling the exterior part 310 to the terminal part 320, coupling by sealing may be possible. The terminal part 320 may include a metal material, and the exterior part 310 may include a resin material that has adhesive properties by heat. Thus, the resin material of the adhesive exterior part 310 may be melted by heat and coupled to the terminal part 320 by a pressure.

As an example of a configuration to improve structural stability of the cap 300, movement of the terminal part 320 of the cap 300 in a direction away from the electrode assembly 100 according to Embodiment 1 of the present invention may be restricted by the exterior part 310. In this regard, the terminal part 320 of the cap 300 may include an exposed part 322 and a support part 321.

The exposed part 322 of the terminal part 320 may be provided to be exposed to the outside of the exterior part 310. Thus, the terminal part 320 electrically connected to the electrode assembly 100 may be in electrical contact with the outside through the exposed part 322 exposed to the outside of the exterior part 310. That is, the secondary battery 10 may provide electrical energy to the outside through the exposed part 322.

Referring to FIG. 3, the exposed part 322 of the terminal part 320 may include an outer member 3221 and a passing member 3222.

The outer member 3221 of the exposed part 322 may be disposed outside the exterior part 310. That is, one surface of the exposed part 322 may be disposed to protrude from one surface of the exterior part 310 in a direction away from the electrode assembly 100 (upward direction in FIG. 3). Based on FIG. 3, one surface of the exposed part 322 may be a top surface of the exposed part 322, and one surface of the exterior part 310 may be a top surface of the exterior part 310.

Regarding the more specific shape of the outer member 3221, a through-hole may be defined in the exterior part 310 to connect the exposed part 322 to the support part 321, and the outer member 3221 may be provided in a shape that overlaps the through-hole of the exterior part 310. The overlap may be referred to as a case in which the entire outer member 3221 is disposed within a through-hole H based on an projection from the outside of the exterior part 310 toward the inside of the exterior part 310 (downward direction in FIG. 3). This shape may allow the outer member 3221 to be inserted into the through-hole H from the inside of the exterior part 310 to the outside of the exterior part 310 (upward direction in FIG. 3).

The passing member 3222 of the exposed part 322 may extend from an edge of the outer member 3221 toward the inside of the exterior part 310 (downward direction in FIG. 3) to pass through the through-hole. The passing member 3222 may be provided along the edge of the outer member 3221.

The support part 321 of the terminal part 320 may be connected to the exposed part 322 and be supported on the exterior part 310 inside the exterior part 310 to prevent the exposed part 322 from being separated from the exterior part 310. Since the support part 321 is supported by the exterior part 310, the structural stability of the cap 300 may be improved.

Regarding the shape of the support part 321 supported by the exterior part 310, the support part 321 may include a first member 3211 and a second member 3212.

The first member 3211 of the support part 321 may extend from the passing member 3222 in a direction (left and right direction in FIG. 3) perpendicular to the extension direction (vertical direction in FIG. 3) of the passing member 3222. Here, the first member 3211 may be provided to be hooked on an inner surface of the exterior part 310. Based on FIG. 3, an inner surface of the exterior part 310 may be referred to as a bottom surface of the exterior part 310.

The second member 3212 of the support part 321 may extend from the first member 3211 toward the electrode assembly 100, and one end of the second member 3212 may be electrically connected to the electrode assembly 100. Here, the second member 3212 may be provided in plurality. That is, the support part 321 may be electrically connected to the electrode assembly 100 at a plurality of positions. Thus, when the secondary battery 10 includes a plurality of electrode assemblies 100, each of the plurality of electrode assemblies 100 may be electrically connected to the second member 3212 disposed at a close position. As a result, the secondary battery 10 may be improved efficiently in battery capacity.

As illustrated in FIG. 2, the second member 3212 of the support part 321 may be disposed along an edge of the first member 3211. This is only an example, and the second member 3212 of the support part 321 may be connected only to both opposite edges of the first member 3211 having a substantially rectangular cross-section. That is, the second member 3212 may be connected only to upper and lower portions of the first member 3211 with reference to FIG. 2. Here, the second members 3212 extending from the upper and lower portions of the first member 3211 may be respectively connected to the two electrode tabs 110 arranged vertically.

The second member 3212 may be coupled to the exterior film 200. Specifically, the second member 3212 may include a metal material, and the exterior film 200 may include a resin layer having thermal adhesive properties at a portion facing the second member 3212. Thus, the second member 3212 and the exterior film 200 may be coupled to each other by sealing using heat and a pressure.

In the cap 300 of the secondary battery 10 according to Embodiment 1 of the present invention, the exterior part 310 and the terminal part 320 may cover the electrode assembly 100. Depending on the material of the exterior part 310, moisture on the outside of the exterior part 310 may be permeated into the exterior part 310 through the exterior part 310. The permeation of the moisture may cause defects in the secondary battery 10. In the cap 300 of the secondary battery 10 according to Embodiment 1 of the present invention, the terminal part 320 made of a metal together with the exterior part 310 may cover the electrode assembly 100, and thus, an area of the exterior part 310 through which the moisture is permeated may be reduced. In addition, since the support part 321 is disposed to be supported by the exterior part 310, a moisture permeation path provided between the support part 321 and the exterior part 310 may be long. Thus, the secondary battery 10 according to Embodiment 1 of the present invention may reduce an amount of moisture permeated into the interior to reduce a limitation in performance of the secondary battery 10.

As an example of a configuration for reducing moisture permeation, etc., the terminal part 320 of the cap 300 of the secondary battery 10 according to Embodiment 1 of the present invention may include a material having relatively low moisture permeability. Specifically, the terminal part 320 of the cap 300 may be made of a material having lower moisture permeability than that of the material forming the exterior part 310. Therefore, when the exterior part 310 and the terminal part 320 cover the electrode assembly 100 together, an amount of moisture permeated into a space in which the electrode assembly 100 is accommodated may be reduced compared to the case in which the electrode assembly 100 is covered only with the exterior part 310.

### Embodiment 2

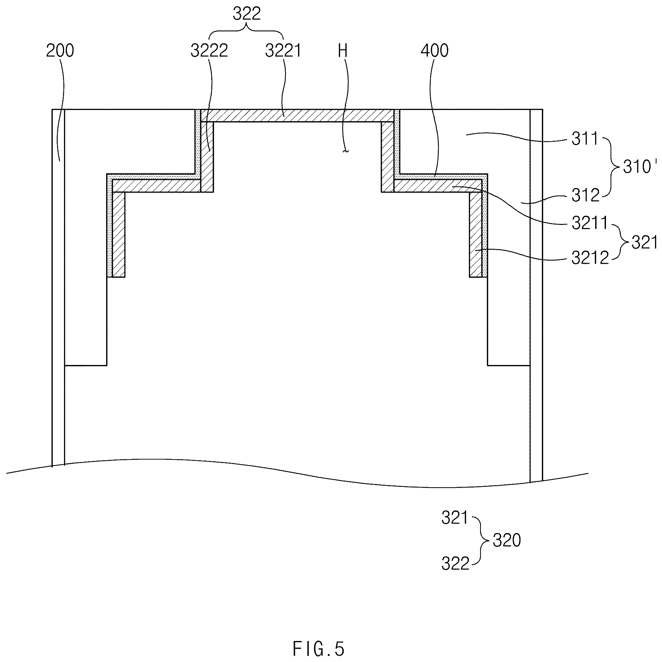

FIG. 4 is a schematic exploded perspective view of a secondary battery 10' according to Embodiment 2 of the present invention, and FIG. 5 is a schematic cross-sectional view illustrating a cap 300 and a portion of an exterior film 200 of the secondary battery 10' according to Embodiment 2 of the present invention.

Hereinafter, a detailed description of the same configuration as that of the secondary battery 10 according to Embodiment 1 of the present invention will be omitted, and the description will focus on the differences. The secondary battery 10' according to Embodiment 2 of the present invention may be different from the secondary battery 10 according to Embodiment 1 in a shape of an exterior part 310', a shape of a terminal part 320, and a coupling method of the configurations.

Referring to FIG. 4, the secondary battery 10' according to Embodiment 2 of the present invention may include an electrode assembly 100, an exterior film 200, and a cap 300. The exterior film 200 of the secondary battery 10' may be provided to surround a portion of the electrode assembly 100. Specifically, the exterior film 200 may be provided to surround the cap 300 and the electrode assembly 100. More specifically, the exterior film 200 may be coupled to the cap 300 to define an internal space, and the electrode assembly 100 may be accommodated in the internal space.

As an example of a configuration for improving the coupling force with the terminal part 320, the exterior part 310' of the cap 300 according to Embodiment 2 of the present invention may include a first cover part 311 and a second cover part 312.

Referring to FIG. 5, the first cover part 311 may be provided to cover a first member 3211 from the outside of the exterior part 310'. In addition, the second cover part 312 may extend from the first cover part 311 in a direction toward the electrode assembly 100. Specifically, the second cover part 312 may be disposed between the second member 3212 and the exterior film 200. More specifically, the second cover part 312 may be disposed along an edge of the first cover part 311.

The second cover part 312 may be disposed between the second member 3212 and the exterior film 200 so that one surface thereof is coupled to the second member 3212 of the support part 321, and the other side thereof is coupled to the exterior film 200. Here, an adhesive 400 may be applied for bonding between the second cover part 312 and other components. That is, the adhesive 400 may be applied to one surface and the other surface of the second cover part 312. The second cover part 312 may be coupled to the second member 3212 and the exterior film 200 through the adhesive 400. The adhesive 400 may be applied between the exterior film 200 and the exterior part 310' so that the exterior film 200 and the exterior part 310' are coupled to each other, and the adhesive 400 may be applied between the exterior part 310' and the terminal part 320 so that the exterior part 310' and the terminal part 320 are coupled to each other. Here, the type and application form of the adhesive 400 for coupling may vary.

The cap 300 according to Embodiment 2 of the present invention may be disposed so that one surface of the terminal part 320 and one surface of the exterior part 310' are disposed on the same surface. In this case, since there is no portion of the terminal part 320 that protrudes to the outside of the exterior part 310', an arrangement of a plurality of secondary batteries 10' may be easy.

The secondary battery according to the embodiment of the present invention described above may effectively prevent performance deterioration due to change in volume of the electrode assembly. More specifically, the electrode assembly may undergo the volume change (expansion or shrinkage) during the charging and discharging processes.

However, since the secondary battery according to this embodiment is provided with the electrode assembly surrounded by the exterior film having predetermined flexibility and stretchability, the exterior film may be stretched or bent according to the change in volume of the electrode assembly. Thus, since the electrode assembly is not subject to additional deformation due to the excessive friction or force, the performance deterioration of the secondary battery due to the deformation may be effectively prevented in the embodiments according to the present invention.

In comparison, in the secondary battery (e.g., the prismatic type secondary battery) in which the electrode assembly is accommodated in the cylindrical metal or plastic housing having certain rigidity, the volume inside the housing may be fixed. As a result, if the change in volume of the electrode assembly occurs during the charging and discharging processes, stress or friction may occur between an inner wall of the housing and the electrode assembly. This may result in a deterioration in performance of the secondary battery by causing the deformation (e.g., twisting) of the electrode assembly.

While Embodiments of the present invention have been described with reference to the specific embodiments, it will be apparent to those skilled in the art that various changes and modifications may be made without departing from the spirit and scope of the invention as defined in the following claims.

### [Description of the Symbols]

- 10, 10':: Secondary battery
- 100:: Electrode assembly
- 110:: Electrode tab
- 200:: Exterior film
- 300:: Cap
- 310, 310':: Exterior part
- 311:: First cover part
- 312:: Second cover part
- 320:: Terminal part
- 321:: Support part
- 322:: Exposed part
- 400:: Adhesive
- 3211:: First member
- 3212:: Second member
- 3221:: Outer member
- 3222:: Passing member

## Claims

1. A secondary battery comprising:
an electrode assembly;
an exterior film surrounding a portion of the electrode assembly; and
a cap surrounding a remaining portion of the electrode assembly,
wherein the cap comprises:
an exterior part coupled to the exterior film; and
a terminal part exposed to an outside and an inside of the exterior part and electrically connected to the electrode assembly at a portion thereof, which is exposed to the inside of the exterior part,
wherein the terminal part is restricted in movement in a direction away from the electrode assembly.

2. The secondary battery of claim 1, wherein the terminal part comprises:
an exposed part exposed to the outside of the exterior part; and
a support part connected to the exposed part and supported on the exterior part inside the exterior part to prevent the exposed part from being separated from the exterior part.

3. The secondary battery of claim 2, wherein the exposed part comprises:
an outer member provided in an overlapping shape by a through-hole defined in the exterior part so as to connect the exposed part to the support part; and
a passing member disposed along an edge of the outer member and extending from the edge of the outer member toward the inside of the exterior part to pass through the through-hole.

4. The secondary battery of claim 3, wherein the support part comprises a first member extending from the passing member in a direction perpendicular to an extension direction of the passing member and provided to be hooked on an inner surface of the exterior part.

5. The secondary battery of claim 4, wherein the support part further comprises a second member extending from the first member toward the electrode assembly and having one end electrically connected to the electrode assembly.

6. The secondary battery of claim 5, wherein the second member comprises a metal material, and
the exterior film comprises a resin layer coupled to the second member by heat and a pressure.

7. The secondary battery of claim 5, wherein the exterior part comprises:
a first cover part covering the first member from the outside of the exterior part; and
a second cover part disposed between the second member and the exterior film, coupled to the exterior film and extending from the first cover part toward the electrode assembly.

8. The secondary battery of claim 7, wherein the support part comprises a metal material,
the first cover part comprises a resin material having adhesive properties by heat, and
the support part and the first cover part are coupled to each other by heat and a pressure.

9. The secondary battery of claim 1, wherein the terminal part is disposed to protrude in a direction, which is away from the electrode assembly, from one surface of the exterior part.

10. The secondary battery of claim 1, wherein, in the cap, one surface of the exterior part is disposed on the same surface as one surface of the terminal part.

11. The secondary battery of claim 1, wherein the exterior part comprises a metal material, and
the exterior film comprises a metal layer coupled to the exterior part by welding.

12. The secondary battery of claim 1, wherein the exterior part comprises a resin material having adhesive properties by heat, and
the exterior film comprises a resin layer coupled to the exterior part by heat and a pressure.

13. The secondary battery of claim 1, wherein the exterior film and the exterior part are coupled to each other by an adhesive applied between the exterior film and the exterior part.

14. The secondary battery of claim 1, wherein the exterior part and the terminal part are coupled to each other by an adhesive applied between the exterior part and the terminal part.

15. A secondary battery comprising:
an electrode assembly;
an exterior film having an internal space in which the electrode assembly is accommodated and an exterior opening configured to allow the internal space to communicate with an outside; and
a cap covering the exterior opening of the exterior film,
wherein the cap comprises:
an exterior part coupled to the exterior film; and
a terminal part exposed to an outside and an inside of the exterior part and electrically connected to the electrode assembly at a portion thereof, which is exposed to the inside of the exterior part,
wherein the terminal part is disposed to cover at least a portion of the exterior opening and made of a material having lower moisture permeability than that of a material forming the exterior part.
